# EUROPÄISCHE PATENTANMELDUNG

(11) **EP 0 539 999 A1**
(43) Veröffentlichungstag der Anmeldung: **05.05.1993**
(21) Anmeldenummer: 92118529.4
(22) Anmeldetag: 29.10.1992
(51) Int. Cl.: B60D 1/06, B60R 9/06

(54) **Kombination eines Kugelkopfkupplungselements eines Fahrzeugs mit einem Anschlusselement eines Fahrzeuganbauteils und Gruppe von Kugelkopfkupplungselementen für solche Kombinationen**

(30) Priorität: 30.10.1991 DE 4135794
(71) Anmelder: ROCKINGER Spezialfabrik für Anhängerkupplungen GmbH & Co., D-80904 München (DE)
(72) Erfinder: Wohlhüter, Gerhard, Dipl.-Ing., W-8000 München 50 (DE)
(74) Vertreter: Weickmann, Heinrich, Dipl.-Ing.

(57) **Zusammenfassung**

Ein Kugelkopfkupplungselement eines Leichtfahrzeugs weist neben einem Kugelkopf (12) im Bereich seines Trägers (10) ein Stützprofil (14a,4b,14c,14d) auf, an welchem sich ein Anschlußelement 16 mittels eines komplementären Fortsatzes (22) unter Einschränkung wenigstens eines Teils der rotatorischen Bewegungsmöglichkeiten des Anschlußelements (16) gegenüber dem Kugelkopf (12) abstützen kann. Dabei sind bei einer Vielzahl von formunterschiedlichen Kugelkopfkupplungselementen die Stützprofile (14a,14b,14c,14d) in gleicher räumlicher Zuordnung und mit gleicher Formgebung bezüglich eines in den Kugelkopfmittelpunkt gelegten Koordinatensystems angeordnet.

## Beschreibung

Die Erfindung betrifft eine Kombination eines Kugelkopfkupplungselements eines Fahrzeugs mit einem Anschlußelement eines Fahrzeuganbauteils, wobei das Kugelkopfkupplungselement einen zum Anbau an das Fahrzeug ausgebildeten Kugelkopfträger und an diesem einen Kugelkopf aufweist und wobei das Anschlußelement eine Kugelkopfaufnahme aufweist.

Personenfahrzeuge, Kombifahrzeuge und Leichttransporter (im folgenden Leichtfahrzeuge genannt), werden in großem Umfang mit Kugelkopfkupplungselementen ausgerüstet, die zum Ankuppeln von Einachsanhängern, Zwillingsanhängern, Wohnwagen, Bootsanhängern (im folgenden Anhänger genannt) und dergleichen bestimmt und ausgebildet sind. Als Anschlußelement dient in diesen Fällen in der Regel die Deichsel des Anhängers und diese Deichsel ist mit einer Kugelkopfaufnahme in Form einer Kugelpfanne und einer zugehörigen Verriegelungsmechanik zur Verriegelung von Kugelkopf und Kugelpfanne ausgeführt.

Der Erfindung liegt die Aufgabe zugrunde, ein an solchen Leichtfahrzeugen vorhandenes oder nachträglich anzubringendes Kugelkopfkupplungselement über den Anwendungsfall der Ankupplung von Anhängern hinaus zum Anbau von Fahrzeuganbaukonstruktionen, insbesondere Geräteträgern, an dem jeweiligen Leichtfahrzeug nutzbar zu machen.

Zur Lösung dieser Aufgabe wird erfindungsgemäß vorgeschlagen, daß an dem Kugelkopfträger mindestens eine trägerseitige Zusatzstützfläche angebracht ist und daß an dem Anschlußelement mindestens eine anschlußelementenseitige Zusatzstützfläche angebracht ist, wobei die beiden Zusatzstützflächen bei Eingriff des Kugelkopfs in die Kugelkopfaufnahme in Stützanlage bringbar sind derart, daß sie die rotatorischen Bewegungsmöglichkeiten des Anschlußelements gegenüber dem Kugelkopf wenigstens zum Teil unterdrücken.

An Leichtfahrzeugen der mit Kugelkopfkupplungselementen ausgerüsteten Art sollen häufig auch Anbaukonstruktionen wie Gepäckträger, Fahrradträger, Skiträger, Bootsträger und Reserveradträger angebracht werden. Die Anbringung solcher Anbaukonstruktionen bereitet je nach Aufbau und Ausstattung des jeweiligen Leichtfahrzeugs mehr oder weniger Schwierigkeiten. Die Tendenz, Leichtfahrzeuge aus dünnen Karosserieblechen und häufig auch aus Kunststoffteilen aufzubauen, erschwert die Anbringung von solchen Anbaukonstruktionen zunehmend, insbesondere dann, wenn die jeweilige Karosserie nicht schon vom Fahrzeughersteller mit entsprechenden Befestigungselementen ausgerüstet wird.

Ist an einem Leichtfahrzeug ein Kugelkopfkupplungselement vorhanden, so wäre dieses aufgrund seiner hohen Eigenfestigkeit und seiner stabilen Anbringung am jeweiligen Fahrzeugrahmen, die beide im Hinblick auf die erheblichen Deichsellasten eines Anhängers gegeben sind, durchaus geeignet, um die Lasten von Anbaukonstruktionen aufzunehmen. Andererseits steht aber an dem Kugelkopf eines Kugelkopfkupplungselements keine Möglichkeit zur Verfügung, um einer Anbaukonstruktion mehr als eine punktuelle Unterstützung zu vermitteln, wobei diese punktuelle Unterstützung sämtliche rotatorischen Freiheitsgrade, d.h. die rotatorischen Freiheitsgrade um eine Längsachse, eine Querachse und eine Hochachse des Kugelkopfes, offenläßt. Unter Längsachse, Querachse und Hochachse werden dabei die durch den Mittelpunkt des Kugelkopfs gehenden Achsen verstanden, die in Fahrtrichtung liegen (Längsachse), horizontal und quer zur Fahrtrichtung liegen (Querachse) und senkrecht auf der Fahrfläche stehen (Hochachse). Deshalb sind bisher kaum Einsatzmöglichkeiten von Kugelkopfkupplungselementen zur Befestigung von Anbaukonstruktionen gegeben.

Dadurch, daß erfindungsgemäß durch den gegenseitigen Eingriff der Zusatzstützflächen die rotatorischen Bewegungsmöglichkeiten ganz oder teilweise eingeschränkt werden können, ergibt sich eine breite Anwendungspalette für lastübertragende Verbindungen zwischen Leichtfahrzeug und Anbaukonstruktionen.

Der Grad der Einschränkung der rotatorischen Freiheitsgrade ist dabei beliebig variierbar. So ist es moglich, daß durch den Eingriff der Zusatzstützflächen die rotatorischen Bewegungsmöglichkeiten des Anschlußelements um eine Längsachse des Kugelkopfs oder/und um eine Querachse des Kugelkopfs oder/und um eine Hochachse des Kugelkopfs wenigstens teilweise unterdrückt sind.

Wenn zum Beispiel durch die Zusatzstützflächen nur die rotatorischen Bewegungsmöglichkeiten um die Hochachse und die Längsachse des Anschlußelements vollständig unterdrückt sind, kann man das Anschlußelement zur starren Verbindung mit einer Anbaukonstruktion benutzen, die dann dank der Erhaltung der rotatorischen Bewegungsmöglichkeit um die Querachse bei Bedarf vom jeweiligen Leichtfahrzeug abgeklappt werden kann, z.B. wenn man einen Skiträger oder einen Fahrradträger zum Zwecke der Zugänglichmachung einer Heckklappe in Richtung auf die Horizontale abklappen will. Es ist auch denkbar, die rotatorische Bewegungsmöglichkeit des Anschlußelements um die Querachse teilweise zu unterdrücken. In diesem Fall ergibt sich für das Anschlußelement eine Bewegungsbegrenzung in einer ergonomisch günstig zu wählenden Gebrauchslage.

Geht man einen Schritt weiter und unterdrückt man auch die rotatorische Bewegungsmöglichkeit des Anschlußelements um die Querachse, so ist das Anschlußelement starr am Fahrzeugrahmen angebracht. In diesem Fall kann man beispielsweise einen Ersatzradträger starr mit dem Anschlußelement verbinden, so daß es neben der Verbindung des Anschlußelements mit dem Kugelkopfkupplungselement überhaupt keiner weiteren Verbindung mit dem Fahrzeug bedarf. Andererseits könnte man die Anbaukonstruktion auch gelenkig mit dem starr an dem Kugelkopfkupplungselement angebrachten Anschlußelement verbinden, so daß die Anbaukonstruktion um eine Schwenkachse gegenüber dem Anschlußelement verschwenkt werden kann, wiederum etwa für die Zugänglichmachung einer Heckklappe oder einer Hecktür des jeweiligen Fahrzeugs.

Die Ausbildung der Kugelkopfträger kann grundsätzlich beliebig sein. Häufig sind die Kugelkopfträger mit einer Trägerstange ausgebildet, welche einen im wesentlichen horizontalen, d.h. parallel zur Längsachse verlaufenden Trägerstangenteil und einen im wesentlichen vertikal verlaufenden, d.h. in Richtung der Hochachse verlaufenden, Trägerstangenteil mit dem Kugelkopf an seinem oberen Ende aufweist. Dabei kann zwischen dem horizontalen Trägerstangenteil und dem vertikalen Trägerstangenteil ein schräg nach oben verlaufender Übergangsteil vorgesehen sein. Hier erweist es sich nun als besonders vorteilhaft, wenn die trägerseitige Zusatzstützfläche an dem horizontalen Trägerstangenteil oder/und an dem Übergangsstangenteil angebracht ist und wenn die anschlußelementenseitige Zusatzstützfläche an einem über die Begrenzung der Kugelkopfaufnahme nach unten vorstehenden Fortsatz des Anschlußelements angebracht ist.

Während bei herkömmlichen Kugelkopfkupplungselementen Trägerstangenteil und Übergangsstangenteil regelmäßig mit Rundquerschnitt ausgeführt sind, kann bei einer erfindungsgemäßen Konstruktion im Bereich des Übergangsstangenabschnitts oder/und im Bereich des horizontalen Trägerstangenabschnitts an der Trägerstange ein polygonaler, insbesondere annähernd rechteckiger, Querschnitt ausgebildet sein, der mindestens eine Stützfläche bildet; in diesem Fall kann man an dem Fortsatz des Anschlußelements mindestens eine anschlußelementenseitige Stützfläche zur Anlage an diesem polygonalen Querschnitt ausbilden. Durch die Zahl der an dem Fortsatz ausgebildeten anschlußelementenseitigen Stützflächen kann die Zahl der zu unterdrückenden rotatorischen Bewegungsmöglichkeiten variiert werden.

Beispielsweise kann man an dem Fortsatz zwei den polygonalen Querschnitt zwischen sich aufnehmende anschlußelementenseitige Stützflächen anformen. Wenn diese beiden anschlußelementenseitigen Stützflächen jeweils annähernd orthogonal zu der Querachse des Kugelkopfs liegen und gleichzeitig an dem Polygon-Querschnitt anliegen, so kann man die rotatorische Bewegungsmöglichkeit um die Hochachse und die rotatorische Bewegungsmöglichkeit um die Längsachse unterdrücken, jedoch noch eine rotatorische Bewegungsmöglichkeit um die Qerachse, etwa für den oben angegebenen Anwendungsfall eines abklappbaren Ski- oder Radträgers, belassen.

Geht man einen Schritt weiter und sieht man an dem Fortsatz drei den Polygon-Querschnitt eingabelnde anschlußelementenseitige Stützflächen vor, so ist neben der vollständigen Unterdrückung der rotatorischen Bewegungsmöglichkeiten um die Längsachse und um die Hochachse die rotatorische Bewegungsmöglichkeit um die Querachse teilweise unterdrückt, so daß sich eine Schwenkbarkeit des Anschlußelements in einem beschränkten Schwenkbereich und eine Festlegung des Anschlußelements in einer Endstellung dieses beschränkten Bewegungsbereichs ergibt. Dies gilt insbesondere, wenn zwei der anschlußelementenseitigen Stützflächen im wesentlichen orthogonal zur Querachse des Kugelkopfs angeordnet sind und eine dritte anschlußelementenseitige Stützfläche die beiden erstgenannten anschlußelementenseitigen Stützflächen im wesentlichen orthogonal zu diesen verbindet.

Eine vollstandig starre Anbringung des Anschlußelements an dem Kugelkopfkupplungselement ergibt sich dann, wenn an dem Fortsatz drei anschlußelementenseitige Stützflächen in gabelförmiger Zuordnung angeformt sind und wenn eine vierte Stützfläche an dem Fortsatz lösbar angebracht ist. Die Lösbarkeit der vierten Stützfläche erlaubt dabei immer noch ein einfaches Anbauen und Abbauen des Anschlußelements an dem Kugelkopfkupplungselement. Beispielsweise kann die vierte Stützfläche von einem Steckstift gebildet sein.

Eine bevorzugte Ausführungsform ist dabei so gestaltet, daß von den drei in Gabelform einander zugeordneten anschlußelementenseitigen Stützflächen zwei im wesentlichen orthogonal zu der Querachse des Kugelkopfs angeordnet sind, eine dritte im wesentlichen parallel zu der Querachse des Kugelkopfs verlaufend die beiden erstgenannten Stützflächen miteinander verbindet und zur Anlage an der Oberseite des polygonalen Querschnitts ausgebildet ist, während eine vierte, lösbare, anschlußelementenseitige Stützfläche ebenfalls parallel zu der Querachse des Kugelkopfs verlaufend die beiden erstgenannten anschlußelementenseitigen Stützflächen miteinander verbindet, an der Unterseite des polygonalen Querschnitts anliegt und lösbar ist.

Die Kugelkopfkupplungselemente für Leichtfahrzeuge werden von einer größeren Zahl von Herstellern und Verteilern angeboten und sind in Anpassung an verschiedene Fahrzeugtypen in ihrem Aufbau sehr unterschiedlich. Genormt ist in der Regel nur die Form und Dimensionierung des Kupplungskopfes selbst und des unmittelbar an den Kugelkopf anschließenden Teils des Kugelkopfträgers. Es besteht kaum eine Chance, eine vollständige Normung der verschiedenen Kugelkopfkupplungselemente zu erreichen. Aus diesem Grunde muß der Hesteller von Anbaukonstruktionen, sofern er diese an den Kugelkopfkupplungselementen zur Unterdrückung rotatorischer Freiheitsgrade abstützen will, seine Anbaukonstruktionen oder zumindest deren Anschlußelemente für die verschiedensten Kugelkopfkupplungselemente ausbilden, auf Lager halten und vertreiben. Um dieses komplizierte Herstellungs-, Lagerhaltungs- und Verteilungssystem zu vereinfachen, wird vorgeschlagen, daß die Kugelkopfkupplungselemente in einem Teilbereich ihres Kugelkopfträgers genormt werden. Dies dürfte sich wesentlich einfacher durchsetzen lassen und schränkt bei dem Hersteller der Neubaukonstruktionen die Notwendigkeit verschiedenster anschlußelementenseitiger Stützflächenanordnungen erheblich ein. Es wird deshalb für eine Gruppe von Kugelkopfkupplungselementen, von denen jedes einen Kugelkopfträger und an diesem Kugelkopfträger einen Kugelkopf umfaßt, wobei der Kugelkopf und ein an dem Kugelkopf unmittelbar angrenzender Trägerabschnitt bei allen Mitgliedern der Gruppe identisch geformt sind, während die Kugelkopfträger im übrigen unterschiedliche Formgebung aufweisen, folgendes vorgeschlagen: An jedem der Kugelkopfträger ist mindestens eine trägerseitige Zusatzstützfläche angebracht; die Form und Lage der trägerseitigen Zusatzstützflächen bezüglich eines mit seinem Ursprung im Kugelkopfmittelpunkt liegenden, eine Längsachse, eine Querachse und eine Hochachse aufweisenden Koordinatensystems ist für alle Mitglieder der Gruppe im wesentlichen identisch.

Auf diese Weise sind Anschlußelemente von Anbauteilen mit genormter räumlicher Zuordnung einer Kugelkopfaufnahme und jeweils mindestens einer anschlußelementenseitigen Zusatzstützfläche an jedem Mitglied der Gruppe anbringbar und unter Einschränkung mindestens eines der rotatorischen Freiheitsgrade abstützbar.

Die beiliegenden Figuren erläutern die Erfindung anhand eines Ausführungsbeispiels; es stellen dar:
- Figur 1: eine Teilansicht eines Kugelkopfkupplungselements zum Anbau an einem Leichtfahrzeug;
- Figur 2: einen Schnitt nach Linie II-II beim Anbau eines Anschlußelements;
- Figur 3: einen Schnitt nach Linie III-III der Figur 2;
- Figur 4: die Seitenansicht eines Leichttransporters, an dem ein Skiträger mittels eines auf ein Kugelkopfkupplungselement aufgesetzten Anschlußelements befestigt ist und
- Figur 5: eine Rückansicht eines Leichttransporters gemäß Figur 4.

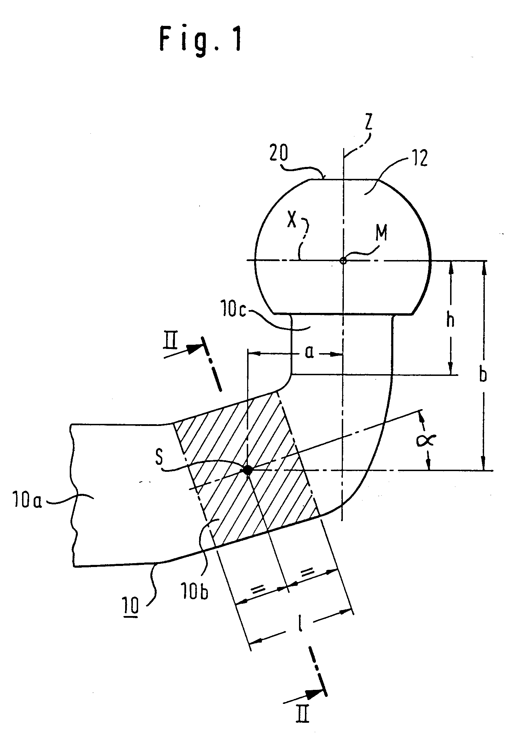

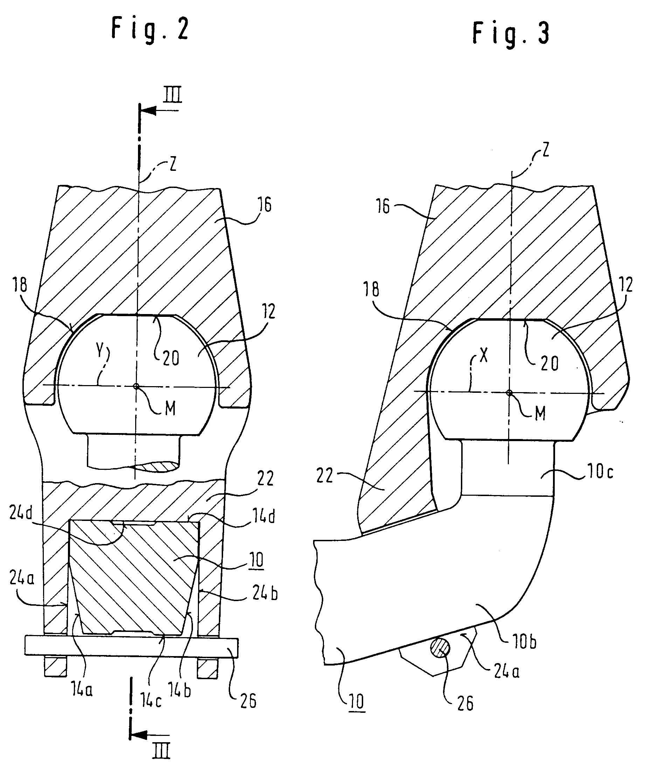

In Figur 1 ist ein stangenförmiger Kugelkopfträger mit 10 bezeichnet. Am linken nicht dargestellten Ende des Kugelkopfträgers 10 befindet sich eine Befestigungsplatte oder dergl. zum Anbau am Rahmen eines Leichtfahrzeugs. Man erkennt in der Figur 1 einen im wesentlichen horizontalen Trägerstangenteil 10a und einen im wesentlichen vertikalen Trägerstangenteil 10c. Auf dem Letzteren ist ein Kugelkopf 12 angebracht, welcher genormt ist. Genormt ist auch der Bereich h, der sich vom Kugelkopfmittelpunkt M aus über einen Teil des vertikalen Trägerstangenteils 10c erstreckt. Der in Figur 1 schraffiert dargestellte Bereich des Übergangsstangenteils ist mit dem aus Figur 2 ersichtlichen Stützprofils ausgeführt, welches von trägerseitigen Zusatzstützflächen 14a, 14b, 14c und 14d begrenzt ist.

Gemäß Figuren 2 und 3 ist ein Anschlußelement 16 mit einer Kugelkopfaufnahme 18 auf den Kugelkopf 12 aufgesetzt. Dem Kugelkopfmittelpunkt M ist ein rechtwinkeliges Koordinatensystem mit einer Längsachse X, einer Querachse Y und einer Hochachse Z zugeordnet. Grundsätzlich ist das Anschlußelement 16 gegenüber dem Kugelkopf einer Drehbewegung um die Achsen X,Y und Z fähig. Denkbar ist es, daß der Kugelkopf 12 an seiner Oberseite eine plane Fläche 20 aufweist, welche aber rotatorische Bewegungen um die Achsen X und Y nicht wesentlich, um die Achse Z überhaupt nicht einschränken kann. An dem Anschlußelement 16 ist nun ein Fortsatz 22 angebracht, welcher gabelförmig ausgebildet ist.

Dieser Fortsatz 22 weist anschlußelementenseitige Stützflächen 24a, 24b, 24d auf, die an den zusatzträgerseitigen Zusatzstützflächen zur Anlage kommen. Ein verriegelbarer Steckstift 26 schließt die Gabelform des Fortsatzes 22.

Der Querschnitt und die Länge des Übergangsstangenteils 10b, wie in Figur 2 dargestellt, sei nun für alle vorkommenden Konstruktionen von Kugelkopfkupplungselementen identisch, so wie in Fig. 1 und 2 durch die dort dargestellte Geometrie gezeigt. Ferner sei die Lage dieses Querschnittprofils bezüglich des Koordinatensystems X,Y,Z für alle vorkommenden Kugelkopfkupplungselemente identisch, wie in Figur 1 durch den Winkel α und durch die Abstände a und b des Schwerpunkts S des Profils von der Hochachse Z bzw. der Längsachse X angedeutet. Der Schwerpunkt S liege in der Mitte der genormten Länge l. Als Folge hiervon können unabhängig von der sonstigen Form des Kugelkopfträgers 10 alle Kugelkopfkupplungselemente mit ein und demselben Anschlußelement 16 ausgeführt werden, d.h. insbesondere mit identischer Form und Lage der anschlußelementenseitigen Zusatzstützflächen 24a,24b,24d und 26 bezüglich eines durch den Mittelpunkt der Kugelkopfaufnahme 18 definierten Koordinatensystems des Anschlußelements 16.

Nach Lösung des Steckstifts ist es ohne weiteres möglich, das Anschlußelement 16 unter entsprechender Lösung des Kupplungsschloßes von dem Kugelkopfkupplungselement abzuziehen. Der Anbau erfolgt in umgekehrter Reihenfolge. Nach erfolgtem Anbau, d.h. in dem Zustand gemäß Figuren 2 und 3, ist das Anschlußelement 16 starr an dem Kugelkopfkupplungselement angebaut.

Man kann sich beispielsweise vorstellen, daß das Anschlußelement 16 als ein Ersatzradträger ausgebildet ist. Dieser läßt sich also mit wenigen Handgriffen an dem Kugelkopfkupplungselement anbringen und abnehmen.

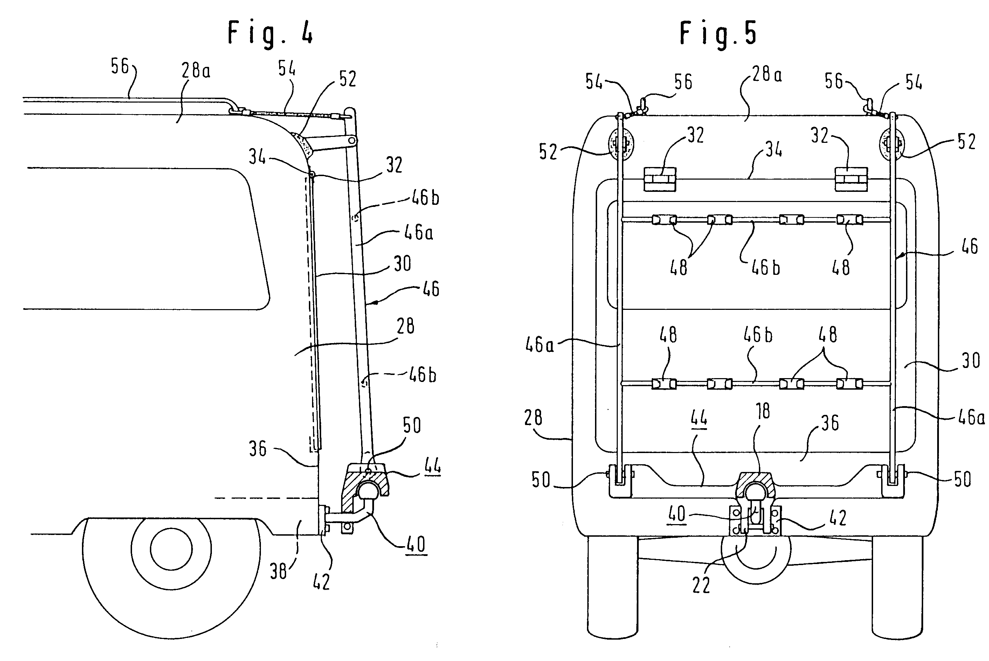

Ein weiterer Anwendungsfall sei anhand der Figuren 4 und 5 dargestellt.

In Figur 4 erkennt man die Seitenansicht eines Leichttransporters, in Figur 5 die Rückansicht dieses Leichttransporters. Der Leichttransporter besitzt eine Karosserie 28 mit einer Heckklappe 30, die mittels Scharniere 32 um eine Schwenkachse 34 schwenkbar ist und gegen eine Schwelle 36 anlegbar und an dieser verriegelbar ist. An dem Rahmen 38 des Transporters ist ein Kugelkopfkupplungselement 40 vermittels einer Befestigungsplatte 42 befestigt. Im übrigen hat das Kugelkopfkupplungselement 40 die Form gemäß den Figuren 1 bis 3. Auf das Kugelkopfkupplungselement 40 ist ein Anschlußelement 44 aufgesetzt und verriegelt, welches hinsichtlich der Kugelkopfaufnahme 18 und hinsichtlich der Spornausbildung 22 genauso ausgebildet ist wie in den Figuren 2 und 3 dargestellt. Dieses Anschlußelement 44 ist somit auf dem Kugelkopfkupplungselement 40 starr befestigt. An dem Anschlußelement 44 ist ein Skiträger 46 angebracht, der von Längsstäben 46a und Querstäben 46b gebildet ist. An den Querstäben 46b sind Skihalter 48 angebracht. Die Längsstäbe 46a sind an dem Anschlußelement 44 in Schwenkachsen 50 schwenkbar gelagert. Die oberen Enden der Längsstäbe 46a sind mit Anlagepuffern 52 zur Anlage an dem Dachteil 28a der Karosserie gebracht und werden durch elastische Spannelemente 54 in Anlage an dem Dachteil 28a gehalten. Die Spannelemente 54 können z.B. an Dachgestängen 56 eingehakt sein. Damit ist der ganze Skiträger 46 ausschließlich unter Verwendung des Kugelkopfkupplungselements 40 an der Karosserie 28 befestigbar. Es bedarf keiner zusätzlichen Befestigungselemente an der Karosserie 28. Will man Zugang zu der Heckklappe 30, so kann man nach Lösen der Spannelemente 54 den Skiträger 46 um die Schwenkachsen 50 abklappen.

## Patentansprüche

1. Kombination eines Kugelkopfkupplungselements (40) eines Fahrzeugs mit einem Anschlußelement (16) eines Fahrzeuganbauteils, wobei das Kugelkopfkupplungselement (40) einen zum Anbau an das Fahrzeug ausgebildeten Kugelkopfträger (10) und an diesem einen Kugelkopf (12) aufweist und wobei das Anschlußelement (16) eine Kugelkopfaufnahme (18) aufweist,
**dadurch gekennzeichnet,**
daß an dem Kugelkopfträger (10) mindestens eine trägerseitige Zusatzstützfläche (14a-14d) angebracht ist und daß an dem Anschlußelement (16) mindestens eine anschlußelementenseitige Zusatzstützfläche (24a,24b,24d,26) angebracht ist, wobei die beiden Zusatzstützflächen bei Eingriff des Kugelkopfs (12) in die Kugelkopfaufnahme (18) in Stützanlage bringbar sind derart, daß sie die rotatorischen Bewegungsmöglichkeiten des Anschlußelements (16) gegenüber dem Kugelkopf (12) wenigstens zum Teil unterdrücken.

2. Kombination nach Anspruch 1,
**dadurch gekennzeichnet,**
daß durch den Eingriff der Zusatzstützflächen (14a-14c;24a, 24b,24d,26) die rotatorischen Bewegungsmöglichkeiten des Anschlußelements (16) um eine Längsachse (X) des Kugelkopfs (12) oder/und um eine Querachse (Y) des Kugelkopfs (12) oder/und um eine Hochachse (Z) des Kugelkopfs (12) wenigstens teilweise unterdrückt sind.

3. Kombination nach Anspruch 2,
**dadurch gekennzeichnet,**
daß durch die Zusatzstützflächen (14a,14b;24a,24b) die rotatorischen Bewegungsmöglichkeiten des Anschlußelements (16) um die Hochachse (Z) und die Längsachse (X) vollständig unterdrückt sind.

4. Kombination nach Anspruch 3,
**dadurch gekennzeichnet,**
daß durch die Zusatzstützflächen (14c,14d;26,24d) auch die rotatorische Bewegungsmöglichkeit des Anschlußelements (16) um die Querachse (Y) teilweise unterdrückt ist.

5. Kombination nach Anspruch 4,
**dadurch gekennzeichnet,**
daß durch die Zusatzstützflächen (14c,14d;26,24d) die rotatorische Bewegungsmöglichkeit um die Querachse (Y) vollständig unterdrückt ist.

6. Kombination nach einem der Ansprüche 1 bis 5,
**dadurch gekennzeichnet,**
daß der Kugelkopfträger (10) mit einer Trägerstange ausgebildet ist, welche einen im wesentlichen horizontal verlaufenden Trägerstangenteil (10a) und einen im wesentlichen vertikal verlaufenden Trägerstangenteil (10c) mit dem Kugelkopf (12) an seinem oberen Ende sowie gegebenenfalls einen schräg nach oben verlaufenden Übergangsstangenteil (10b) zwischen dem horizontalen Trägerstangenteil (10a) und dem vertikalen Trägerstangenteil (10c) aufweist, daß die trägerseitige Zusatzstützfläche (14a-14d) an dem horizontalen Trägerstangenteil (10a) oder/und an dem Übergangsstangenteil (10b) angebracht ist und daß die anschlußelementenseitige Zusatzstützfläche (24a,24b; 26,24d) an einem über die Begrenzung der Kugelkopfaufnahme (18) nach unten vorstehenden Fortsatz (22) des Anschlußelements (16) angebracht ist.

7. Kombination nach Anspruch 6,
**dadurch gekennzeichnet,**
daß im Bereich des Übergangsstangenabschnitts (10b) oder/und im Bereich des horizontalen Trägerstangenabschnitts (10a) an der Trägerstange (10) ein polygonaler, insbesondere annähernd rechteckiger Querschnitt (14a-14d) ausgebildet ist und daß an dem Fortsatz (22) mindestens eine anschlußelementenseitige Stützfläche (24a,24b;26,24d) zur Anlage an diesem polygonalen Querschnitt ausgebildet ist.

8. Kombination nach Anspruch 7,
**dadurch gekennzeichnet,**
daß an dem Fortsatz (22) zwei den polygonalen Querschnitt (14a-14d) zwischen sich aufnehmende anschlußelementenseitige Stützflächen (24a,24b) angeformt sind.

9. Kombination nach Anspruch 8,
**dadurch gekennzeichnet,**
daß die beiden anschlußelementenseitigen Stützflächen (24a,24b) jeweils annähernd orthogonal zu der Querachse (Y) des Kugelkopfs (12) liegen.

10. Kombination nach einem der Ansprüche 8 und 9,
**dadurch gekennzeichnet,**
daß an dem Fortsatz (22) drei den polygonalen Querschnitt eingabelnde anschlußelementenseitige Stützflächen (24a,24b,24d) angeformt sind.

11. Kombination nach Anspruch 10,
**dadurch gekennzeichnet,**
daß zwei der anschlußelementenseitigen Stützflächen (24a,24b) im wesentlichen orthogonal zur Querachse (Y) des Kugelkopfs (12) angeordnet sind und eine dritte anschlußelementenseitige Stützfläche (24d) die beiden erstgenannten anschlußelementenseitigen Stützflächen (24a,24b) im wesentlichen orthogonal zu diesen verbindet.

12. Kombination nach einem der Ansprüche 8 bis 11,
**dadurch gekennzeichnet,**
daß an dem Fortsatz (22) drei anschlußelementenseitige Stützflächen (24a,24b,24d) in gabelförmiger Zuordnung angeformt sind und daß eine vierte Stützfläche (26) an dem Fortsatz (22) lösbar angebracht ist.

13. Kombination nach Anspruch 12,
**dadurch gekennzeichnet,**
daß die vierte Stützfläche (26) von einem Steckstift (26) gebildet ist.

14. Kombination nach Anspruch 12 oder 13,
**dadurch gekennzeichnet,**
daß von den drei in Gabelform einander zugeordneten anschlußelementenseitigen Stützflächen (24a,24b,24d) zwei (24a,24b) im wesentlichen orthogonal zu der Querachse (Y) des Kugelkopfs (12) angeordnet sind, eine dritte (24d) im wesentlichen parallel zu der Querachse (Y) des Kugelkopfs (12) verlaufend die beiden erstgenannten Stützflächen (24a,24b) miteinander verbindet und zur Anlage an der Oberseite (14d) des polygonalen Querschnitts ausgebildet ist, während eine vierte lösbare anschlußelementenseitige Stützfläche (26) ebenfalls parallel zu der Querachse (Y) des Kugelkopfs (12) verlaufend die beiden erstgenannten anschlußelementenseitigen Stützflächen (24a,24b) miteinander verbindet, an der Unterseite (14c) des polygonalen Querschnitts anliegt und lösbar ist.

15. Eine Gruppe von Kugelkopfkupplungselementen für Fahrzeuge, jedes dieser Kugelkopfkupplungselemente umfassend einen Kugelkopfträger (10) und an diesem Kugelkopfträger (10) einen Kugelkopf (12), wobei der Kugelkopf (12) und gegebenenfalls ein an den Kugelkopf (12) unmittelbar angrenzender Trägerbereich (10c) bei allen Mitgliedern der Gruppe identisch geformt sind, während die Kugelkopfträger (10) im übrigen unterschiedliche Formgebung aufweisen,
**dadurch gekennzeichnet,**
daß an jedem der Kugelkopfträger (10) mindestens eine trägerseitige Zusatzstützfläche (14a-14d) angebracht ist und daß die Form und Lage der trägerseitigen Zusatzstützflächen (14a-14d) bezüglich eines mit seinem Ursprung im Kugelkopfmittelpunkt (M) liegenden, eine Längsachse (X), eine Querachse (Y) und eine Hochachse (Z) aufweisenden Koordinatensystems für alle Mitglieder der Gruppe im wesentlichen identisch ist derart, daß Anschlußelemente (16) von Anbauteilen mit genormter räumlicher Zuordnung einer Kugelkopfaufnahme (18) und jeweils mindestens einer anschlußelementenseitigen Zusatzstützfläche (24a,24b,24d;26) an jedem Mitglied der Gruppe anbringbar und unter Einschränkung mindestens eines der rotatorischen Freiheitsgrade abstützbar sind.
